**Europäisches Patentamt**

**European Patent Office**

**Office européen des brevets**

(19)

(11) Veröffentlichungsnummer : **0 040 289**
**B1**

(12) **EUROPÄISCHE PATENTSCHRIFT**

(45) Veröffentlichungstag der Patentschrift :
30.07.86

(21) Anmeldenummer : 81100843.2

(22) Anmeldetag : 06.02.81

(51) Int. Cl.⁴ : **B 65 G 23/44**

(54) Spanneinrichtung für einen Senkrechtförderer, insbesondere ein Becherwerk.

(30) Priorität : 10.05.80 DE 3017969

(43) Veröffentlichungstag der Anmeldung :
25.11.81 Patentblatt 81/47

(45) Bekanntmachung des Hinweises auf die Patenterteilung : 30.07.86 Patentblatt 86/31

(84) Benannte Vertragsstaaten :
AT BE CH FR GB IT LI NL

(56) Entgegenhaltungen :
DE-C- 660 528
DE-U- 7 707 711
US-A- 1 010 879
US-A- 1 387 849

(73) Patentinhaber : Bernhard Beumer Maschinenfabrik KG
Oelder Strasse 40
D-4720 Beckum (DE)

(72) Erfinder : Lauhoff, Heinz, Ing. grad.
Richard-Wagner-Strasse 29
D-4720 Beckum (DE)
Erfinder : Bökamp, Alfons, Ing. grad.
Anton-Aulke-Weg 7
D-4740 Oelde-Stromberg (DE)

(74) Vertreter : Hoormann, Walter, Dr.-Ing. et al
FORRESTER & BOEHMERT Widenmayerstrasse 4/I
D-8000 München 22 (DE)

## Beschreibung

Die Erfindung betrifft eine Spanneinrichtung zum Spannen des Zugträgers eines Senkrechtförderers, insbesondere eines Becherwerkes, dessen endloser Zugträger um eine von einem Antrieb angetriebenen Antriebstrommel sowie um eine mit Abstand zur Antriebstrommel angeordnete, relativ zu dieser parallel bewegliche, den Zugträger umlenkende Spanntrommel umläuft, mit einem zwischen der Antriebstrommel und der Spanntrommel angeordneten, auf die Spanntrommel in einer von der Antriebstrommel weggerichteten Richtung einwirkenden Spanngewicht, und mit zur Übertragung einer Spannkraft auf die Spanntrommel dienenden, am Gehäuse geführten, vertikalen Verbindungselementen, die einerseits mit der Achse der Spanntrommel und andererseits über Verbindungsteile, mittels welcher die Neigung der Spanntrommelachse einstellbar ist, mit einer am Gehäuse befestigten, horizontalen Welle verbunden sind.

Becherwerke, deren die Becher mit im allgemeinen gleicher Teilung haltender Zugträger entweder aus einem Gurt bzw. aus einer oder mehreren Ketten besteht, werden im allgemeinen über beidseitig der auch als Umlenktrommel bezeichneten Spanntrommel angeordnete Spannspindeln bezüglich ihres Zugträgers elastisch, d. h. über Federdruck, gespannt, oder es wird zwischen den beiden sog. Schloten, in denen der Zugträger mit den Bechern umläuft, ein Spanngewicht angeordnet, welches beidseitig über ein als Druckstäbe ausgebildetes Verbindungselement zwischen dem Spanngewicht und der Spanntrommel auf diese so einwirkt, daß der Zugträger gespannt wird, in dem die Spanntrommel aufgrund des Spanngewichtes in Achsrichtung des Becherwerkes von der Antriebstrommel fortgerichtet in Betriebsstellung verschoben wird.

Diese bekannten Spanneinrichtungen haben den Nachteil, daß es nicht gewährleistet ist, daß die Spann- bzw. Umlenktrommel beim Spannvorgang aus ihrer Ausgangsstellung parallel verschoben wird. Kommt es aber gegenüber der ausgerichteten Ausgangsstellung vor Aufbringung der Spannkraft zu Schiefstellungen der Spanntrommelachse, so führt dieses in aller Regel zu Laufschwierigkeiten des Zugträgers, da bei einer derartigen Schiefstellung beispielsweise ein als Gurt ausgebildeter Zugträger dann dazu neigt, von der Umlenktrommel seitlich abzulaufen.

Es kommt hinzu, daß bei der zuerst erwähnten, elastischen Spannung des Zugträgers ein automatisches Nachfahren bei elastischer oder insbesondere bleibender Längung des Zugträgers nicht gegeben ist. Dieses hat zur Folge, daß der Zugträger dann nach einer bestimmten Betriebszeit schlaff wird, wenn die Zugträgerspannung nicht in bestimmten zeitlichen Abständen ständig überprüft wird, so daß es zu einem Rutschen zwischen dem Zugträger und der Antriebstrommel kommen kann, was zu einem entsprechenden Verschleiß führt, und im übrigen auch die erforderliche Führung des Zugträgers dann nicht mehr gegeben ist.

Außerdem ist eine solche Federvorspannung auch nicht in der Lage, Längendifferenzen des Zugträgers auszugleichen, die beispielsweise durch unterschiedliche Dehnungen des Zugträgers über dessen Breite oder/und durch unterschiedliche Dehnungen der Schlote hervorgerufen werden können.

Die vorstehend unter Bezugnahme auf die bekannten elastischen Spanneinrichtungen für Becherwerke angeführten Nachteile sind zwar bei einer Spanneinrichtung mit einem auch als Gegengewicht bezeichneten Spanngewicht überwiegend nicht vorhanden, doch kann es bei den bekannten Gewichtsspanneinrichtungen beim Spannen häufig noch zu erheblich größeren Verwinklungen bzw. Schiefstellungen der Spann- bzw. Umlenktrommel kommen, als dieses bei einer elastischen Spanneinrichtung der Fall ist.

Um diesem betrieblichen Übelstand Rechnung zu tragen, ist aus der DE-C-660 528 bereits eine Spanneinrichtung bekanntgeworden, die zwei im wesentlichen rechtwinklig zu der Achse des Becherwerks bzw. dessen Zugträger verlaufende Hebel aufweist, die jeweils an ihrem einen Ende an der Spanntrommelachse angreifen, und die an ihrem entgegengesetzten anderen Ende an einer Welle angelenkt sind, die ihrerseits mittels geeigneter Lager am Becherwerksgehäuse gehalten ist, doch weist diese bekannte Spanneinrichtung noch verschiedene beachtliche betriebliche Nachteile auf.

Zunächst ist festzustellen, daß sich diese bekannte Spanneinrichtung aufgrund ihrer Konstruktion nur dafür eignet, im sog. Becherwerksfuß, der gegenüber dem im wesentlichen aus den beiden Schloten bestehenden Gehäuse erheblich verbreitert ist, angeordnet zu werden, und nicht zwischen den beiden Schloten angeordnet werden kann. Dieses hat aber neben anderen Mißständen den Nachteil, daß beispielsweise eine Nachrüstung bereits vorhandener Becherwerke mit dieser bekannten Spanneinrichtung praktisch nicht möglich ist.

Es kommt hinzu, daß sich bei dieser bekannten Spanneinrichtung die Spann- bzw. Umlenktrommel beim Spannvorgang zwangsläufig auf einem Kreisbogen bewegt, dessen Radius im wesentlichen gleich der Länge der Hebel ist, also deren Abstand zwischen der Spanntrommelachse und ihrer die Lagerung der Hebel vornehmenden, gemeinsamen Welle. Eine solche Bewegung der Spanntrommel aus der Fluchtlinie zur Achse der Antriebstrommel ist aber aus ohne weiteres ersichtlichen Gründen in höchstem Maße unzweckmäßig, wobei die Fluchtabweichung um so größer ist, je kürzer die Länge der Hebel ausgebildet ist.

Ein weiterer beachtlicher Nachteil dieser bekannten Spanneinrichtung besteht darin, daß sie nur eine bedingte Nachstellbarkeit zuläßt, und daß demgemäß bei verhältnismäßig großen Zugträgerdehnungen, die insbesondere bei einem verhältnismäßig großen Achsabstand eines Becherwerkes auftreten und abhängig von dem Zugträgermaterial beispielsweise bei bestimmten Gurten besonders gravierend sein können, nicht mehr in der Lage ist, die zwangsläufig auftretende elastische und bleibende Dehnung in einer betrieblich befriedigenden Weise aufzunehmen. Auch läßt sich bei dieser bekannten Spanneinrichtung die Spanntrommelachse nicht so einstellen, daß sie zur Achse der Antriebstrommel parallel ist, was zur Vermeidung eines seitlichen Ablaufens des Zugträgers in höchstem Maße wünschenswert ist.

Letzteres ist bei der aus der US-A-1 010 879 bekannten Spanneinrichtung möglich, bei welcher die vertikalen Verbindungselemente als jeweils mit einem Gewinde versehene Stangen ausgebildet sind, deren Gewindeabschnitt jeweils mit einer Mutter eines Rahmens im Eingriff ist, so daß durch Betätigung eines am oberen Ende jedes Verbindungselementes befindlichen Handrades die Lagerblöcke für die Spanntrommelachse hinsichtlich ihrer vertikalen Positionierung singulär eingestellt werden können. Eine solche Einstellung setzt zunächst einmal einen in sich steifen Führungsrahmen für die Verbindungselemente voraus und im übrigen eine auch bei rauhem Betrieb zuverlässig arbeitende Vertikalführung des Führungsrahmens, wenn sichergestellt werden soll, daß die Spanntrommelachse die eingestellte Neigung auch dann beibehält, wenn es während des Betriebes zu Dehnungen des Zugträgers kommt, so daß mithin zum einen ein verwindungs- sowie biegesteifer und damit entsprechend stark dimensionierter Rahman sowie andererseits auch während des Betriebes problemlos arbeitende Rahmenführung erforderlich sind, was häufig nicht möglich ist, so daß sich diese bekannte Spannvorrichtung in der Praxis nicht durchgesetzt hat.

Unter überwiegender Vermeidung der vorgenannten Nachteile ist aus der US-A-1 387 849 eine gattungsgemäße Spanneinrichtung bekanntgeworden, bei welcher die Verbindungselemente jeweils an ihrem der Spanntrommelachse zugekehrten, mit dieser verbündeten Endabschnitt aus Stangen und an ihrem oberen anderen Endabschnitt aus einer Zahnstange bestehen, wobei zwischen dem Zahnstangenabschnitt und dem Stangenabschnitt eines Verbindungselementes jeweils eine Schraubverbindung angeordnet ist, mittels welcher die Neigung der Spanntrommelachse einstellbar ist. Dabei wird das Erfordernis eines Rahmens, wie er beim Gegenstand der US-A-1 010 879 vorgesehen ist, dadurch vermieden, daß eine bei einer einseitigen Längung oder Schrumpfung des Zugträgers entstehende lokale Achsbewegung der Spanntrommelachse zwecks Aufrechterhaltung der Parallelität der Spanntrommelachse über eine Welle auf das andere Ende der Spanntrommelachse übertragen wird, auf welcher im Bereich der beiden Zahnstangen jeweils ein Ritzel fest angeordnet ist, welches mit der betreffenden Zahnstange im Eingriff ist. Kommt es aufgrund einer entsprechenden Dehnung des Zugträgers zu einem einseitigen Anheben oder Absinken der Spanntrommelachse, so wird mithin von der auf dieser Seite befindlichen Zahnstange über das fest auf der Welle angeordnete Ritzel ein Torionsmoment auf die Welle übertragen, welches über das auf der anderen Seite befindliche Ritzel auf die dort befindliche Zahnstange übertragen wird, so daß diese in entsprechender Weise entweder angehoben oder abgesenkt wird.

Die aus der US-A-1 387 849 bekannte Spannvorrichtung ist aber schon aufgrund der Zahnradeingriffe zwischen den Ritzeln und den Zahnstangen für den rauhen, schmutzigen Betrieb von Becherwerken od. dgl. grundsätzlich ungeeignet, zumal eine Kapselung praktisch nicht möglich ist. Darüber hinaus ist die für den Eingriff mit den Ritzeln erforderliche, relativ genaue Führung der Zahnstangenabschnitte verhältnismäßig schwierig. Allgemein läßt sich weiterhin sagen, daß eine derartige Ausgestaltung allenfalls dann ohne größere Probleme realisierbar ist, wenn die beiden Schlote des Senkrechtförderers weitgehend gekapselt sind und die Spanneinrichtung im freien Zwischenraum zwischen den Schloten erfolgt. Selbst bei einer gekapselten Ausbildung der Schlote kommt es aber schon aufgrund der Verschmutzung bei den auftretenden Beanspruchungen zu einem erheblichen Verschleiß, da die Zahnstangen/Ritzel-Verbindung stets voll mit der Spannkraft beaufschlagt ist.

Der vorliegenden Erfindung liegt die Aufgabe zugrunde, die bekannte Spanneinrichtung der eingangs beschriebenen Gattung unter Aufrechterhaltung ihrer Vorteile (geringe Baugröße, insbesondere auch bzgl. der Vertikalerstreckung sowie der erforderlichen Dimensionierung der kraft- bzw. momentübertragenden Teile zwischen den Verbindungselementen) dahingehend zu verbessern, daß sichergestellt ist, daß die Spanntrommelachse während des Betriebes stets parallel zu ihrer Ausgangsstellung verbleibt und dennoch vor Betriebsaufnahme parallel zur Antriebstrommel eingestellt werden kann, wobei darüber hinaus eine praktisch wartungsfreie Spanneinrichtung geschaffen werden soll, an deren Verbindung zwischen den Verbindungselementen und der diese verbindenden Welle zugleich auch der Achsverlauf der Spanntrommel einzustellen ist, ohne daß es hierfür einer gesonderten Verstelleinrichtung bedarf, wobei darüber hinaus eine einfache, robuste und betriebssichere Vertikalführung vorhanden ist.

Die Lösung dieser Aufgabe erfolgt erfindungsgemäß dadurch, daß die Verbindungsteile als im wesentlichen quer zu den Verbindungselementen verlaufende Hebel ausgebildet sind, die Langlöcher aufweisen, in welche von den Verbindungselementen vorstehende Zapfen greifen, wobei die Verbindungselemente jeweils mindestens im Bereich der Hebel mit einem Gewindeabschnitt versehen sind, auf dem jeweils beiderseits der Zapfen eine Mutter angeordnet ist.

Die Erfindung ist nachstehend an einem Ausführungsbeispiel unter Bezugnahme auf eine Zeichnung weiter erläutert. Es zeigt :

Figur 1 eine Seitenansicht auf den wesentlichen Teil einer erfindungsgemäßen Spanneinrichtung in Richtung des Pfeiles I in Fig. 2 gesehen ;

Figur 2 eine Fig. 1 entsprechende, um 90° versetzte Seitenansicht in Richtung des Pfeiles II in Fig. 1 gesehen ;

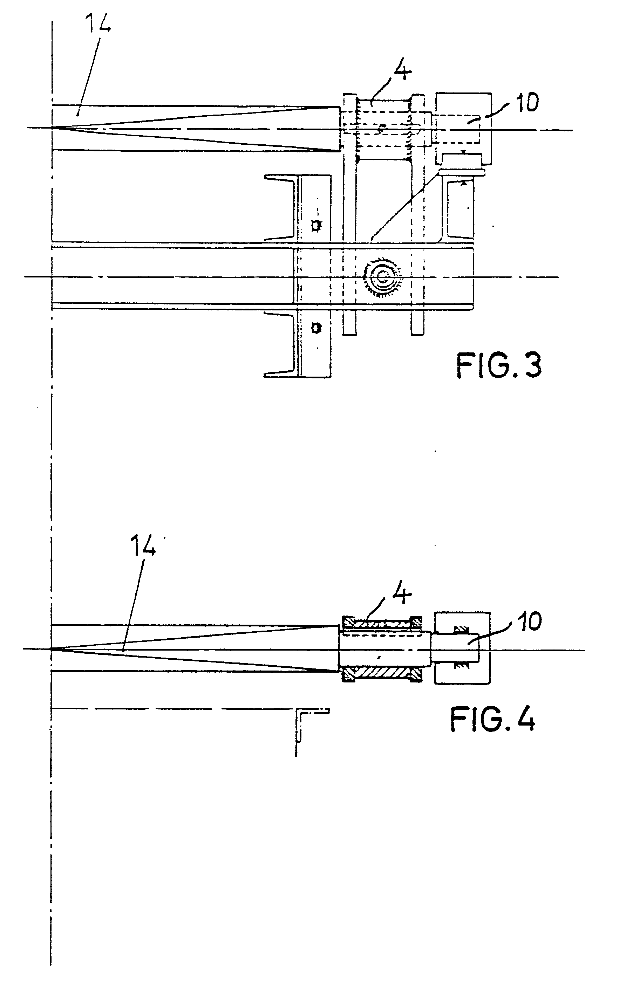

Figur 3 einen Schnitt durch die Darstellung gemäß Fig. 1 in Richtung der Schnittlinie III-III gesehen ;

Figur 4 einen Schnitt durch die Darstellung gemäß Fig. 1 in Richtung der Schnittlinie IV-IV gesehen ; und

Figur 5 die in Fig. 2 mit einem strichpunktierten Kreis eingerahmte Einzelheit in vergrößerter Darstellung.

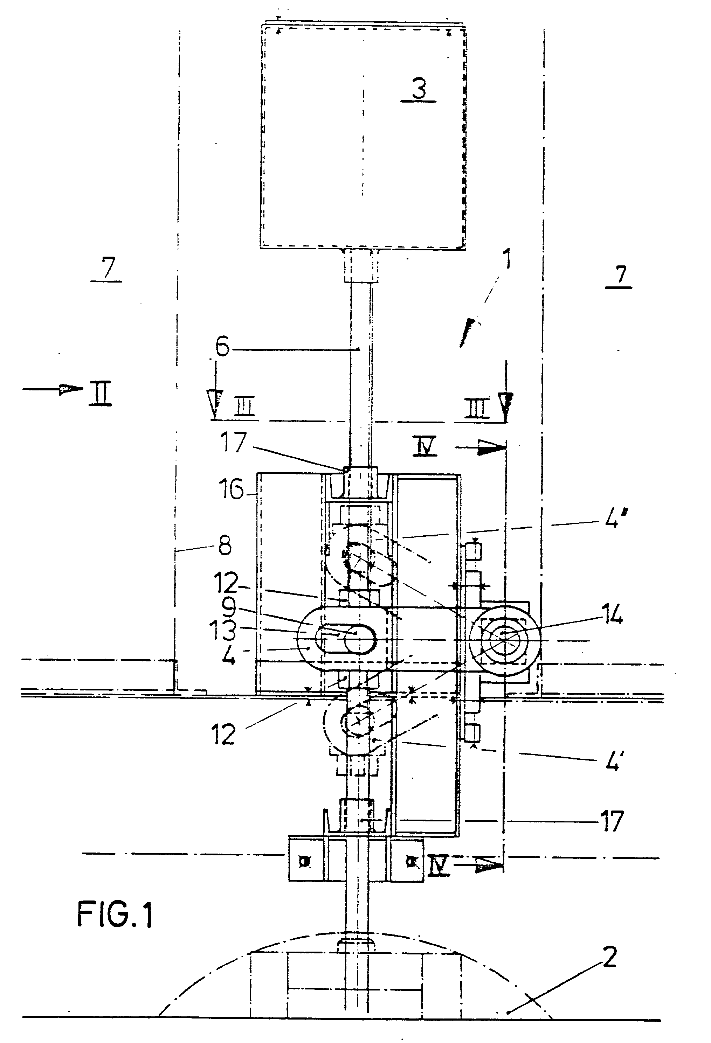

Die Zeichnung zeigt den wesentlichen Teil einer im ganzen mit 1 bezeichneten Spanneinrichtung zum Spannen des nicht gezeichneten Zugträgers eines Becherwerkes, dessen an seiner Außenseite mit nicht dargestellten Bechern versehener, endloser Zugträger um eine von einem nicht dargestellten Antrieb angetriebene Antriebstrommel sowie um eine mit Abstand zur Antriebstrommel angeordnete, den Zugträger umlenkende Spanntrommel umläuft, die im unteren Teil von Fig. 1 mit einer strichpunktierten Linie 2 teilweise dargestellt ist.

Der Abstand der Spanntrommel 2 zu der in der Zeichnung weiter oben liegenden, nicht dargestellten Antriebstrommel ist zum Spannen des nicht dargestellten Zugträgers einstellbar, und zwar mit einem auf die Spanntrommel 2 einwirkenden Spanngewicht 3, welches u. a. mit zwei Hebeln 4 zusammenwirkt, von denen in Fig. 1 nur der eine Hebel erkennbar ist, wie weiter unten noch im einzelnen erläutert ist.

Die Hebel 4 greifen nicht unmittelbar an der nicht dargestellten Spanntrommelachse an, sondern mit Abstand zu dieser. Sie wirken nämlich unmittelbar mit einem Verbindungselement 6 zusammen, welches zwischen dem Spanngewicht 3 und der Spanntrommel 2 angeordnet ist, wobei sich das Spanngewicht 3 zwischen der Spanntrommel 2 und der nicht dargestellten Antriebstrommel befindet, also zwischen den beiden Schloten 7 des Becherwerkes, von denen in Fig. 1 nur jeweils die Innenseite 8 erkennbar ist, während die Außenseiten der Schlote 7 weggebrochen sind.

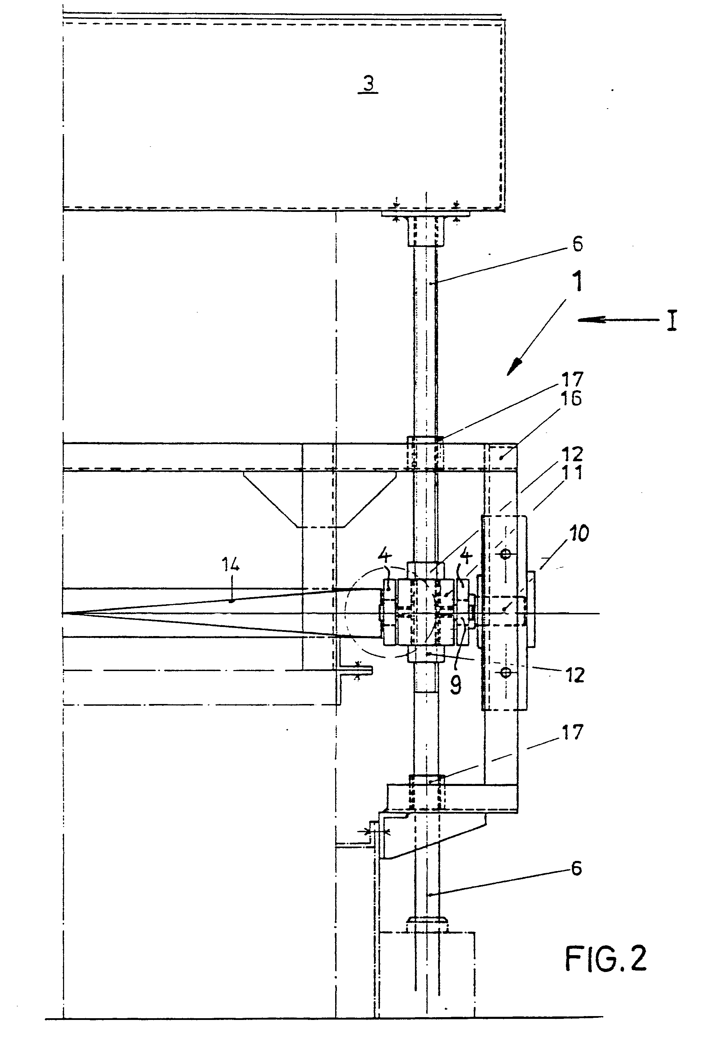

Das Verbindungselement 6 ist, wie insbesondere aus Fig. 2 erkennbar ist, als Zwillingsspindel ausgebildet und mithin mit einem Außengewinde versehen, wobei sich dieses Außengewinde nicht notwendigerweise über die gesamte Länge des Verbindungselementes 6 erstrecken muß, dieses jedoch aus Gründen zweckmäßig sein kann, wie sie weiter unten noch im einzelnen dargelegt sind.

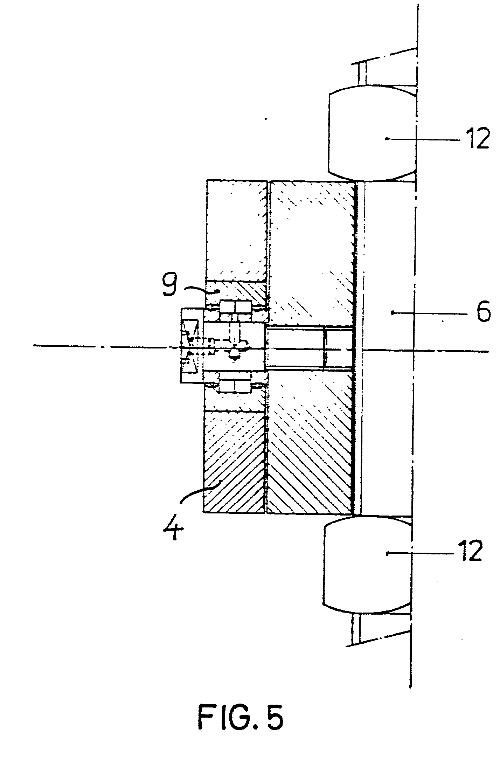

Die Verbindungselemente 6 sind im Bereich der Hebel 4 jeweils mit einem Zapfen 9 versehen, wobei die Zapfen 9 parallel zur Achse der Spanntrommelachse verlaufen. Die Zapfen 9 sitzen jedoch nicht unmittelbar an dem an seiner Außenseite mit Trapezgewinde versehenen Verbindungselement 6, sondern jeweils an einem Kopf 11, der das Verbindungselement 6 jeweils eng umgibt (s. Fig. 5) und an seiner Oberseite sowie an seiner Unterseite jeweils mit einer Mutter 12 gehalten ist.

Die Zapfen 9 greifen in Langlöcher 13 der Hebel 4 (s. Fig. 1), die in Längsrichtung der Hebel 4 verlaufen.

An ihren den Langlöchern 13 abgekehrten Enden sind die Hebel 4 jeweils individuell mit einer Welle 14 verbunden, die mit Lagerzapfen 10 gelagert ist.

Das als Zwillingsspindel ausgestaltete Verbindungselement 6 durchsetzt einen im ganzen mit 16 bezeichneten Spannrahmen, welcher an seinem oberen und unteren Abschnitt Buchsen 17 aufweist, die zugleich als Führungen für das jeweilige Verbindungselement 6 dienen.

Die Wirkungsweise der erfindungsgemäßen Spanneinrichtung ist wie folgt :

Sind die Spanntrommel 2 und die Antriebstrommel sowie das Zugmittel mit den Bechern montiert, und läßt man das Spanngewicht 3 in Aktion treten, wobei es mithin über das Verbindungselement (Zwillingsspindel) 6 im Spannsinne auf die Spanntrommel 2 einwirkt, so sind die Muttern 12 zunächst gelöst, um die Spanntrommel 2 soweit verschieben zu können, daß die vorgegebene Spannung auf den Zugträger wirkt.

In diesem Zustand werden sodann die Hebel 4 beispielsweise so eingestellt, wie dieses in Fig. 1 mit ausgezogenen Linien dargestellt ist, d. h. die Hebel 4 verlaufen im rechten Winkel zur Achse der Spindeln 6.

In diesem ausgerichteten Zustand werden sodann die beiden Muttern 12 angezogen, d. h. an den Kopf 11 herausgeschraubt, so daß das Verbindungselement 6 dann über die aus dem Kopf 11 und den Muttern 12 sowie den Zapfen 9 bestehende Baugruppe formschlüssig mit den Hebeln 4 verbunden ist.

Kommt es nun während des Betriebes zu einer weiteren Dehnung des Zugträgers, so bewegen sich mithin die Hebel 4 in die in Fig. 1 mit strichpunktierten Linien dargestellte Position 4′ nach unten.

Kommt es — beispielsweise durch Verringerung des Spanngewichtes oder Veränderung der Beladung o. dgl. — zu einer Verringerung der Gurtdehnung, so wandern die Hebel in die ebenfalls in die Fig. 1 mit strichpunktierten Linien dargestellte Position 4″ nach oben.

In beiden Fällen ist sichergestellt, daß sich die Spanntrommel 2 in Fluchtrichtung zu der Antriebstrommel bewegen kann, und zwar parallel zu einer vorgegebenen Ausgangseinstellung, und nicht wie bei der obenbeschriebenen bekannten Spanneinrichtung aber im Kreisbogen um die Hebelwelle 14 bewegt.

Weiterhin ist sichergestellt, daß auch verhältnismäßig große Zugträgerdehnungen aufgenommen werden können. Kommt es hierzu, so braucht man lediglich die Muttern 12 zu lösen und die Hebel 4 wiederum in eine mittlere Position zu bewegen, wie sie in Fig. 1 mit ausgezogenen Linien dargestellt ist, wobei diese neue Position dann die neue Ausgangsstellung darstellt. Weiterhin ist ohne weiteres ersichtlich, daß die erfindungsgemäße Spanneinrichtung aufgrund ihrer Ausgestaltung — im Gegensatz zu der oben beschriebenen bekannten Spanneinrichtung mit Schwenkhebeln, bei welcher die Hebel nicht so kurz ausgebildet werden können — ohne weiteres zwischen den Schloten angebracht werden kann, wobei diese Möglichkeit zugleich die weitere Möglichkeit eröffnet, bereits vorhandene Becherwerke mit anderer Spanneinrichtung mit der erfindungsgemäßen Spanneinrichtung nachzurüsten.

## Patentanspruch

Spanneinrichtung (1) zum Spannen des Zugträgers eines Senkrechtförderers, insbesondere eines Becherwerkes, dessen endloser Zugträger um eine von einem Antrieb angetriebenen Antriebstrommel sowie um eine mit Abstand zur Antriebstrommel angeordnete, relativ zu dieser parallel bewegliche, den Zugträger umlenkende Spanntrommel (2) umläuft, mit einem zwischen der Antriebstrommel und der Spanntrommel (2) angeordneten, auf die Spanntrommel (2) in einer von der Antriebstrommel weggerichteten Richtung einwirkenden Spanngewicht (3), und mit zur Übertragung einer Spannkraft auf die Spanntrommel (3) dienenden, am Gehäuse (7, 7') geführten, vertikalen Verbindungselementen (6), die einerseits mit der Achse der Spanntrommel (2) und andererseits über Verbindungsteile (4), mittels welcher die Neigung der Spanntrommelachse einstellbar ist, mit einer am Gehäuse (7, 7') befestigten, horizontalen Welle (14) verbunden sind, dadurch gekennzeichnet, daß die Verbindungsteile (4) als im wesentlichen quer zu den Verbindungselementen (6) verlaufende Hebel (4) ausgebildet sind, die Langlöcher (13) aufweisen, in welche von den Verbindungselementen (6) vorstehende Zapfen (9) greifen, wobei die Verbindungselemente (6) jeweils mindestens im Bereich der Hebel (4) mit einem Gewindeabschnitt versehen sind, auf dem jeweils beiderseits der Zapfen (9) eine Mutter (12) angeordnet ist.

## Claim

A tensioning device (1) for tensioning the chain or the like of a vertical elevator, more particularly a bucket elevator, whose endless chain or the like rotates around a drive drum driven by a drive and around a tensioning drum (2) which is disposed at a distance from the drive drum, can move relatively thereto and deflects the chain, the device comprising a tensioning weight (3) which is disposed between the drive drum and the tensioning drum (2) and which acts thereon in a direction away from the drive drum, the device comprising vertical connecting elements (6) operative to transmit the tensioning force to the tensioning drum (3) and guided on the casing (7, 7') and connected to the shaft of the tensioning drum (2) and also, by way of connecting parts (4) operative for adjustment of the inclination of the tensioning-drum axis, to a horizontal shaft (14) secured to the casing (7, 7'), characterised in that the connecting parts are levers (4) which extend substantially transversely to the connecting elements (6) and which are formed with slots (13) in which pins (9) projecting from the connecting elements (6) engage, each connecting element (6) having at least near the levers (4) a screwthreaded part on which a nut (12) is disposed on either side of the pins (9).

## Revendication

Dispositif de tension (1) destiné à tendre l'élément de traction d'un élévateur, en particulier d'un élévateur à godets, dont l'élément de traction sans fin tourne autour d'un tambour d'entraînement entraîné par un mécanisme d'entraînement ainsi qu'autour d'un tambour tendeur (2) disposé à distance du tambour d'entraînement, mobile parallèlement à ce dernier et renvoyant l'élément de traction, dispositif muni d'un poids tendeur (3), disposé entre le tambour d'entraînement et le tambour tendeur (2) et agissant sur le tambour tendeur (2) dans une direction s'éloignant du tambour d'entraînement, et avec des éléments de liaison verticaux (6), passant sur l'enveloppe (7, 7') et servant à transmettre une force de tension au tambour tendeur (2), éléments de liaison verticaux (6) qui sont reliés, d'une part, à l'axe du tambour tendeur (2) et, d'autre part, par l'intermédiaire de pièces de liaison (4), au moyen desquelles on peut régler l'inclinaison de l'axe du tambour tendeur, à un arbre horizontal (14) fixé à l'enveloppe (7, 7'), caractérisé par le fait que les pièces de liaison (4) se présentent sous forme de leviers (4) s'étendant à peu près transversalement par rapport aux éléments de liaison (6), et présentant des trous oblongs (13) dans lesquels s'insèrent des tourillons (9) en saillie sur les éléments de liaison (6), ces derniers étant chacun munis, du moins dans la zone des leviers (4), d'une portion filetée sur laquelle se trouve un écrou (12) de chaque côté des tourillons (9).

FIG.1

FIG.2

FIG.3

FIG.4

FIG. 5